# EUROPEAN PATENT SPECIFICATION

(11) **EP 4 324 707 B1**
(45) Date of publication and mention of the grant of the patent: **25.02.2026**
(21) Application number: 22788007.7
(22) Date of filing: 28.03.2022
(51) Int. Cl.: B60R 21/207, B60R 21/233, B60R 21/231

(54) **VEHICLE SEAT COMPRISING AN AIRBAG DEVICE**
FAHRZEUGSITZ MIT EINER AIRBAGVORRICHTUNG
SIÈGE DE VÉHICULE AVEC UN DISPOSITIF DE COUSSIN GONFLABLE DE SÉCURITÉ

(30) Priority: 16.04.2021 JP 2021069470
(43) Date of publication of application: 21.02.2024
(73) Proprietor: Autoliv Development AB, 44783 Vargarda (SE)
(72) Inventor: SHIMIZU Takayuki, Yokohama-shi, Kanagawa 222-8580 (JP); NAKASHIMA Atsushi, Yokohama-shi, Kanagawa 222-8580 (JP)
(74) Representative: Müller Verweyen
(86) International application number: PCT/JP2022/014881
(87) International publication number: WO 2022/220082

(56) References cited:
- WO-A1-2019/235730
- WO-A1-2019/235730
- JP-A- 2006 297 997
- JP-A- 2008 030 528
- JP-A- 2008 030 528
- JP-A- 2014 054 955
- JP-A- 2017 088 023
- JP-A- 2019 147 426
- JP-A- 2021 059 320
- KR-A- 20200 075 084
- KR-A- 20200 075 084
- US-A1- 2007 158 933

## Description

### TECHNICAL FIELD

The present invention relates to a vehicle seat comprising an airbag device and the like that protects a side of an occupant.

### BACKGROUND TECHNOLOGY

Conventional airbag devices for protecting an occupant during a vehicle side collision or rollover are known. In these types of airbag devices, the airbag expands and deploys so as to cover the sides of the occupant seated in a seat.

Patent Document 1 describes this type of airbag device, wherein an occupant restraining device is capable of protecting against both near side impacts and far side impacts. This occupant restraining device is provided with an airbag that takes care of an occupant in a near side collision and an upper torso restraining member that takes care of the occupant in a far side collision. The upper torso restraining member makes contact with the shoulders and chest of the occupant from the front side of the vehicle and restrains the occupant to the seat. FIG. 6 of Patent Document 1 describes a form that uses the airbag as the upper torso restraining member.

### RELATED ART DOCUMENTS

### PATENT DOCUMENTS

Patent Document 1 Japanese Unexamined Patent Application 2018-135016. Patent document 2: JP 2014 054955 A discloses a seat according tp the preamble of claim 1.

### SUMMARY OF THE INVENTION

### PROBLEM TO BE SOLVED BY THE INVENTION

When a vehicle side collision occurs, the occupant moves toward the side that received the collision due to the inertial force of the initial collision then moves to the opposite side due to the impact force of the collision. However, in conventional airbag devices, the near side airbag and far side airbag are independent of each other. Therefore, in conventional airbag devices, side cushions that expand and deploy on both sides of the seat do not respectively move together in concert to exert an action of suppressing movement corresponding to a direction of occupant movement. Thus, conventional airbag devices may not be able to effectively restrain a moving occupant, as described above.

In light of such circumstances, an object of the present invention is to provide an airbag device in which side cushions that expand and deploy to both sides of a seat behave integrally during a vehicle side collision or the like, and which is capable of stabilizing the position and the like of a member that connects each side cushion during expansion and deployment.

### MEANS FOR SOLVING THE PROBLEM

The vehicle seat according to the present invention is defined by claim 1.

In the present invention, the attachment members may be support members that support the headrest.

In the present invention, the connecting member is a duct through which the gas can flow, and a periphery of the through-holes is demarcated by a gas flow path in the duct.

In the present invention, the inflator may be attached to the first side cushion, and a portion of the gas injected into the first side cushion from the inflator may be supplied to the second side cushion through the duct.

In the present invention, shape and size of the through-holes may match shape and size of the attachment members.

In the present invention, the through-holes may have an oval shape or an elliptic shape, and may be oriented such that the major axis direction of the oval or ellipse faces the lengthwise direction of the connecting member.

In the present invention, the through-holes may be slits.

In the present invention, the through-holes may be provided in the center section of the connecting member in the width direction.

In the present invention, with the airbag spread out while uninflated and laid in a flat condition on a flat surface, the duct may have widening portions whose width enlarges in a direction intersecting the direction in which the duct extends, and the widening portions may have a portion that expands toward the rear of the seat in the fully expanded state.

In the present invention, in the flat condition, the widening portions may consist of a rear chamber positioned on the rear side of the through-holes and a front chamber positioned on the front side of the through-holes, and the attachment members may be support members that support the headrest, wherein, in the fully expanded state, the rear chamber may be positioned to the rear of the support members and may form a cushion for protecting the head of an occupant in the back seat.

In the present invention, the width of the rear chamber in the front-to-back direction may be greater than the width of the front chamber in the front-to-back direction.

In the present invention, the airbag may be provided with a securing part on either the first side cushion or the second side cushion for securing the airbag to the seat, and a stowing part for the inflator may be provided on the other, wherein the airbag may be secured to the seat by the securing part and the stowing part for the inflator.

In the present invention, the connecting member may also not be provided with a securing part for securing the connecting member to the seat.

### EFFECT OF THE INVENTION

In the present invention, the connecting member that connects the first side cushion and the second side cushion has through-holes into which attachment members for attaching a headrest to a backrest section can be inserted. During expansion and deployment of the airbag, the attachment members are inserted into the through-holes of the connecting member. In addition, in the fully expanded state in which expansion and deployment of the airbag are completed, the connecting member is positioned between an upper portion of the backrest section and a lower portion of the headrest, taking on an extended state in the width direction of the seat. Here, when a vehicle side collision occurs, the occupant seated in the seat experiences significant movement in the lateral direction from the shoulders upward and collides with one of the side cushions. At this time, the one side cushion receives a collision load of the occupant and moves outward within the height range of the upper portion of the seat corresponding to a range of the occupant from the shoulders upward. Along with this movement, the other side cushion is pulled in the lateral direction via the connecting member and moves to the side of the occupant. If the occupant further moves toward the side opposite the initial collision, the occupant collides with the other side cushion.

In the present invention, in the fully expanded state, the connecting member can be stabilized at a position within a height range at which the occupant first collides. Therefore, the load in the lateral direction acts directly on the connecting member. Thus, in contrast to, for example, an airbag having both side cushions connected above the head of the occupant, both side cushions move integrally in the lateral direction. This shortens the distance that is moved before colliding with the other side cushion, allowing the occupant moving to the side opposite the initial collision to be restrained early on.

In addition, in the present invention, because the attachment members are inserted into the through-holes of the connecting member, flapping of the airbag itself can be prevented during expansion and deployment. Furthermore, because the attachment members are inserted into the through-holes of the connecting member, the amount of outward movement of the side cushion receiving the collision load of the occupant at first collision can be suppressed. According to the present invention, the side cushions on both sides of the seat behave integrally during a side collision or the like, and the position and the like of the connecting member can be stabilized during expansion and deployment.

### BRIEF DESCRIPTION OF THE DRAWINGS

FIG. 1A is a drawing illustrating a completed state of expansion and deployment of the airbag according to an embodiment, wherein a seat in which an occupant is seated is viewed from the front.
FIG. 1B is a drawing illustrating the completed state of expansion and deployment of the airbag, wherein the seat is viewed from the front without the occupant.
FIG. 1C is a drawing illustrating the completed state of expansion and deployment of the airbag, wherein the seat without the occupant is viewed from the first side cushion side.
FIG. 1D is a drawing illustrating the completed state of expansion and deployment of the airbag, wherein the seat without the occupant is viewed from the second side cushion side.
FIG. 1E is a drawing illustrating the completed state of expansion and deployment of the airbag, wherein the seat without the occupant is viewed from above.
FIG. 2 is a plan view of the airbag in a flat condition.
FIG. 3A(a) is a plan view of the airbag for describing the embodiment wherein the through-holes have an oval shape, and FIG. 3A(b) is a plan view of the airbag for describing the embodiment wherein the through-holes have an elliptic shape.
FIG. 3B is a plan view of the airbag for describing the embodiment wherein the through-holes are one continuous slit.
FIG. 3C is a plan view of the airbag for describing the embodiment wherein the through-holes are two separate slits.
FIG. 4A(a) is a plan view of the airbag for describing one example of a method for folding the airbag, and FIG. 4A(b) is a cross section view viewed along the line A-A inFIG. 4A(a) .
FIG. 4B is a plan view of the airbag for describing another example of a method for folding the airbag.
FIG. 5 is a front view of the seat in a state in which the airbag is stowed.
FIG. 6 is a drawing for describing the behavior of the first side cushion when the occupant collides with the second side cushion, wherein the airbag in the fully expanded state is viewed from above the headrest at a rearward angle.
FIG. 7(a) to (b) are drawings for describing a state in which the first side cushion lies between a seatbelt and the occupant.
FIG. 8 is a plan view of the airbag in the flat condition according to a Modified Example 1 of the embodiment.
FIG. 9 is a drawing of the airbag according to Modified Example 1 of the embodiment in the fully expanded state, viewed from above the headrest at a rearward angle.
FIG. 10(a) is a plan view of the airbag in the flat condition according to a Modified Example 2 of the embodiment, and FIG. 10(b) is a drawing of the upper portion of the seat, in the fully expanded state, viewed from the front side.
FIG. 11(a) to (b) are drawings for describing issues when the connecting member (gas duct) is not provided with through-holes.

### DESCRIPTION OF THE PREFERRED EMBODIMENTS

Embodiments of the present invention are described below in detail with reference to the drawings. Note that the following embodiments are examples of the present invention, and are not intended to limit the scope of the present invention, the application, or the uses thereof.

In addition, in this specification, the terms "upper" and "upper side" refer to the direction of the head of an occupant 5 seated in a regular position in a seat 1 and "lower" and "lower side" refer to the direction of the feet of the occupant 5. Herein, "regular position" refers to a position in the center of a seat cushion 2 of the seat 1 in the left-right direction with the back of the occupant 5 in contact with a backrest 3 of the seat 1 from top to bottom. Furthermore, the terms "front" and "front side" refer to the direction of the front of the occupant 5 seated in the seat 1 in the regular position and "rear" and "rear side" refer to the direction of the back of the occupant 5. Furthermore, the terms "left" and "left side" refer to the direction of the left hand of the occupant 5 seated in the seat 1 in the regular position, and "right" and "right side" refer to the direction of the right hand of the occupant 5. Furthermore, the occupant 5 assumes an AM50 (a 50th percentile of an adult male in US) of a WorldSID (World Side Impact Dummy). Hereinafter, "regular position" is also referred to as "regular seating position".

The present embodiment is a vehicle seat comprising an airbag device 10 configured such that side cushions 21, 22 provided on both sides of the seat 1 in a vehicle behave integrally in a car or the like during a vehicle side collision, rollover, or the like. In the airbag device 10, the side cushions 21, 22 on both sides are integrated into one airbag 11. Hereinafter, a description of the seat 1 to which the airbag device 10 is mounted will be given prior to the description of the airbag device 10.

### [Schematic Configuration of the Seat]

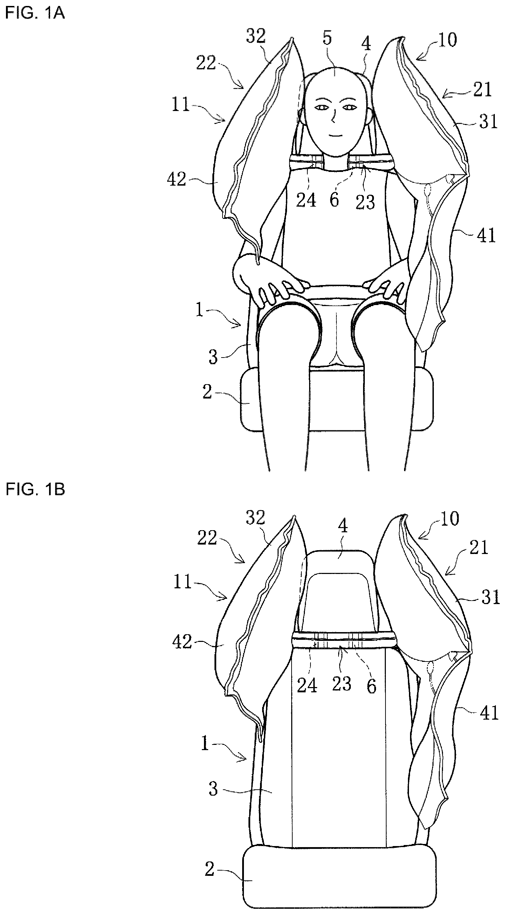

As illustrated in FIG. 1A to 1E, the seat 1 is provided with the seat cushion 2 and the backrest section 3. The upper end part of the backrest section 3 has a headrest 4 attached via rod-like support members 6. The support members 6 are positioned between the upper portion of the backrest section 3 and the lower portion of the headrest 4. The support members 6 correspond to attachment members that attach the headrest 4 to the backrest section 3. Hereinafter, the side near the door for the seat 1 is referred to as the "near side" and the side away from the door for the seat 1 is referred to as the "far side".

### [Configuration of the Airbag Device]

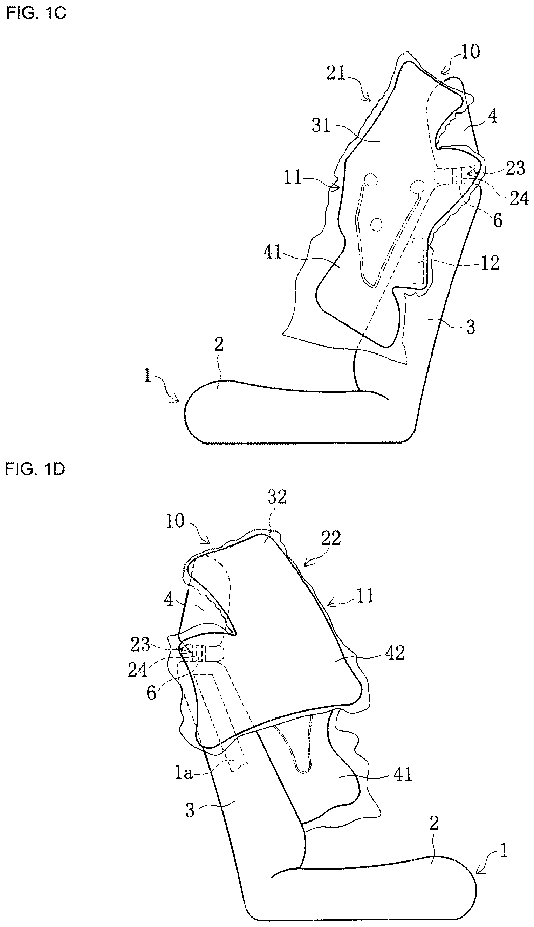

The airbag device 10 is provided with the airbag 11 and an inflator 12 (see FIG. 1C). The airbag 11 is a cloth bag. The inflator 12 is a device for injecting gas that causes the airbag 11 to expand. Hereinafter, an example of the airbag device 10 with which the seat 1 is provided for a driver's seat or passenger seat, which adjoin on the left and right, will be described.

### Airbag in Expansion Completed State

The state of expansion and deployment of the airbag 11 being complete (hereinafter called "expansion completed state") is described below with reference to FIG. 1A to FIG. 1E.

As illustrated in FIG. 1A and 1B, the airbag 11 is provided with the first side cushion 21 that expands and deploys so as to cover one side of the occupant 5 in the regular seating position, the second side cushion 22 that expands and deploys so as to cover the other side of the occupant 5 in the regular seating position, and a gas duct 23 by which the first side cushion 21 and the second side cushion 22 communicate. The gas duct 23 corresponds to the connecting member that connects the first side cushion 21 and the second side cushion 22.

The first side cushion 21 is provided on the near side of the seat 1. The rear side of the first side cushion 21 is secured to the near side of the seat 1. As illustrated in FIG. 1C, the first side cushion 21 extends forward from location secured to the seat 1. The first side cushion 21 is provided with a first head cushion section 31 that expands and deploys so as to cover one side of the head of the occupant 5 in the regular seating position, and a first body cushion section 41 that expands and deploys so as to cover one side of the body (from the shoulders to the abdomen) of the occupant 5 in the regular seating position. The first head cushion section 31 stands upward at a rearward angle from a front side portion of the first body cushion section 41.

The second side cushion 22 is provided on the far side of the seat 1. The rear side of the second side cushion 22 is secured to the far side of the seat 1. As illustrated in FIG. 1D, the second side cushion 22 extends forward from the location secured to the seat 1. The second side cushion 22 is provided with a second head cushion section 32 that expands and deploys so as to cover the other side of the head of the occupant 5 in the regular seating position, and a second body cushion section 42 that expands and deploys so as to cover the other side of the body (shoulder) of the occupant 5 in the regular seating position. The second head cushion section 32 stands upward at a rearward angle from a front side portion of the second body cushion section 42.

The gas duct 23 is formed into a tube shape such that gas can flow therethrough. In the present embodiment, the gas duct 23 is provided with through-holes 24 into which the support members 6 are inserted. In the present embodiment, as illustrated in FIG. 1B, the support members 6 are inserted into the through-holes 24 of the gas duct 23 during expansion and deployment of the first side cushion 21 and the second side cushion 22. Therefore, even in the mid-stages of expansion and deployment, the first side cushion 21 and the second side cushion 22 do not flap. In addition, because the support members 6 are inserted into the through-holes 24 of the gas duct 23, and the gas duct 23 stabilizes at a position between the upper end part of the backrest section 3 and the lower end part of the headrest 4. In the fully expanded state, the gas duct 23 takes on a state extending in the width direction of the seat 1 at a position between the upper end part of the backrest section 3 and the lower end part of the headrest 4. One end of the gas duct 23 opens into the first side cushion 21 and the other end of the gas duct 23 opens into the second side cushion 22.

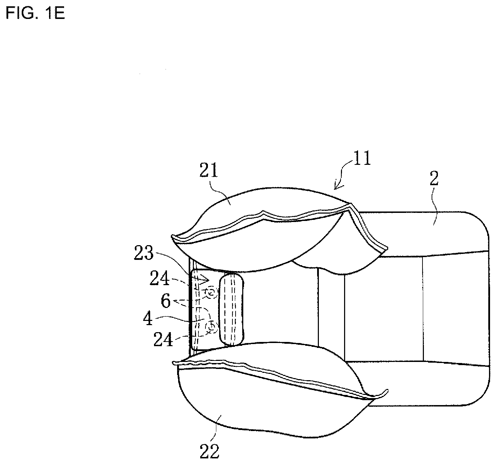

The gas duct 23 is thick enough to contact both the upper end part of the backrest section 3 and the lower end part of the headrest 4. In the present embodiment, as illustrated in FIG. 1E, two circular through-holes 24 are provided in the center section of the gas duct 23 in the width direction (diameter direction) and separated by an interval, taking on a state in which cylindrical support members 6 are respectively inserted in each of the through-holes 24. Furthermore, in the present embodiment, the through-holes 24 are provided in the center section of the gas duct 23 in the width direction (diameter direction). This allows the gas duct 23 to be positioned directly below the headrest 4. The gas duct 23 takes on a state extending in the width direction of the seat 1 along the upper end surface of the backrest section 3 below the headrest 4.

### Airbag in a Spread Flat State

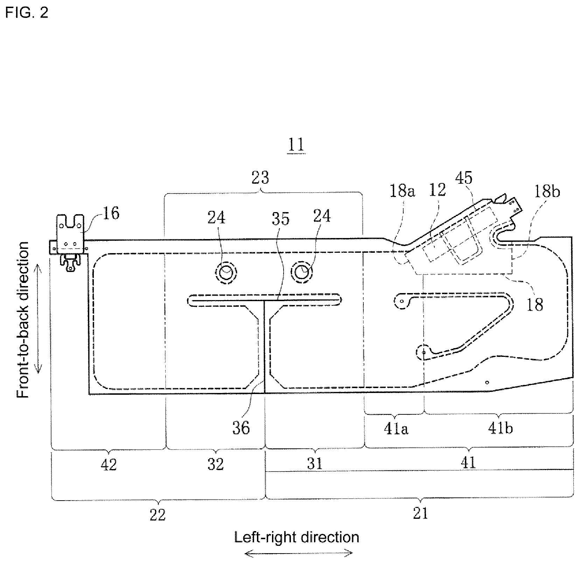

Next, the configuration of the airbag 11 with the airbag 11 in a non-expanded and in a state spread out on a flat surface (hereinafter called "spread flat state") will be described with reference to FIG. 2.

The airbag 11 is a bag configured by overlaying two cloths of the same shape and same size and sewing a prescribed location such as an outer periphery. In FIG. 2, the sewing locations are represented by bold dashed lines. The airbag 11 exhibits a substantially rectangular shape horizontally, as illustrated in FIG. 2. In descriptions of the airbag 11 in the flat condition, the lengthwise direction of the airbag 11 is referred to as the "left-right direction" and the widthwise direction is referred to as the "front-to-back direction", wherein in the front-to-back direction of the airbag 11, the side secured to the seat 1 (the upper side in FIG. 2) is referred to as the "rear side" and the opposite side is referred to as the "front side". Note that the upper side of the airbag illustrated in FIG. 2 is on the rear side even in the fully expanded state.

The airbag 11 is provided with the gas duct 23 extending in the left-right direction, the first side cushion 21 connected to one end of the gas duct 23, and the second side cushion 22 connected to the other end of the gas duct 23.

The gas duct 23 is provided on the rear side of the airbag 11, exhibiting a substantially rectangular shape horizontally. The dimension (thickness) of the gas duct 23 in the front-to-back direction is half the dimension of each of the side cushions 21, 22 in the front-to-back direction or less. As illustrated in FIG. 2, two circular through-holes 24 are provided in the center section of the gas duct 23 in the front-to-back direction and separated by an interval. One of the through-holes 24, contrary to the other through-hole 24, is disposed at a position in the same direction as the flow of gas flowing through the gas duct 23.

In the present embodiment, the through-holes 24 have a circular form, the support members 6 have a cylindrical form, and the inner diameter of the through-holes 24 matches the outer diameter of the support members 6. That is, the shape and size of the through-holes 24 match the shape and size of the support members 6. Here, "match" means that the shapes and sizes are such that the support members 6 are provided enough clearance to be able to be inserted into the through-holes 24.

As illustrated in FIG. 2, the gas duct 23 is sewn at the periphery of the through-holes 24. In the present embodiment, the through-holes 24 are demarcated from the gas flow path in the gas duct 23 by sewing. This eliminates the addition of a special step for forming the through-holes 24 and can ensure that the through-holes 24 are sufficiently strong. The front end of the gas duct 23 (location of the horizontal slit 35 in FIG. 2) is positioned further toward the rear side than the respective front ends of the first side cushion 21 and the second side cushion 22.

The first side cushion 21 has a first body cushion section 41 positioned on the outer side of the gas duct 23 in the left-right direction, and the first head cushion section 31 positioned on the front side of the gas duct 23. The first body cushion section 41 extends further toward the front side than the front end of the gas duct 23. The first head cushion section 31 extends to the inner side in the left-right direction (left side in FIG. 2) from the portion in the first body cushion section 41 that extends to the front side. The first body cushion section 41 corresponds to an outer side cushion section and the first head cushion section 31 corresponds to an inner side cushion section.

The first head cushion section 31 exhibits a substantially rectangular form (or a substantially square form). The first head cushion section 31 adjoins the gas duct 23 via a horizontal slit 35 extending in the left-right direction. In addition, the first body cushion section 41 exhibits a substantially rectangular form horizontally. Strictly speaking, the first body cushion section 41 is the outer side portion in the left-right direction, and the dimension thereof in the front-to-back direction gradually shortens approaching the outer end. The portion of the first body cushion section 41 on the gas duct 23 side is configured of an upper side cushion section 41a for protecting the side of the shoulder of the occupant 5. The portion of the first body cushion section 41 on the side opposite the gas duct 23 is configured of a lower side cushion section 41b for protecting the sides of the chest and abdomen of the occupant 5.

A stowing part 45 for the inflator 12 is formed on the rear side of the first body cushion section 41. The stowing part 45 is provided with a gas guide 18. The gas guide 18 has a first outlet 18a that opens into the upper side cushion section 41a and a second outlet 18b that opens into the lower side cushion section 41b as an outlet for the gas injected from the inflator 12.

The second side cushion 22 has the second body cushion section 42 positioned on the outer side of the gas duct 23 in the left-right direction, and the second head cushion section 32 positioned on the front side of the gas duct 23. The second body cushion section 42 extends further toward the front side than the front end of the gas duct 23. The second head cushion section 32 extends to the inner side in the left-right direction (right side in FIG. 2) from the portion in the second body cushion section 42 that extends to the front side. The second body cushion section 42 corresponds to an outer side cushion section and the second head cushion section 32 corresponds to an inner side cushion section.

The second head cushion section 32 exhibits a substantially rectangular form (or a substantially square form). The second head cushion section 32 adjoins the gas duct 23 via the horizontal slit 35 described above. In addition, the second body cushion section 42 exhibits a substantially rectangular form, being slightly longer in the vertical direction. The second body cushion section 42 is the portion for protecting the side of the shoulder of the occupant 5.

The tip ends of the first head cushion section 31 and the second head cushion section 32 adjoin each other via a vertical slit 36 extending in the front-to-back direction. The first head cushion section 31 and the second head cushion section 32 are formed symmetrically on the left and right, interposing the vertical slit 36. The vertical slit 36 is a cut extending from the front end of the airbag 11 in the front-to-back direction and connects to the center position of the horizontal slit 35 on the rear side. The horizontal slit 35 extends both left and right from the rear end position of the vertical slit 36. Combined, the horizontal slit 35 and the vertical slit 36 form a substantially T-shaped cut.

The rear end of the airbag 11 is provided with a tab 16 as a securing part for securing the airbag 11 to a seat frame 1a of the seat 1. In the present embodiment, the tab 16 is provided at a position in the outer end section (left end section in FIG. 2) of the second side cushion 22. Alternatively, the tab 16 may be provided in the outer end section (right end section in FIG. 2) of the first side cushion 21. In these cases, the airbag 11 can be secured to the seat 1 at the two locations: the tab 16, which secures the outer end section of either the first side cushion 21 or the second side cushion 22, and the stowing part 45 for the inflator 12.

Note that in addition to the embodiment described above, for example, configurations where the airbag 11 is secured by a plurality of tabs are also possible wherein the tab 16 can be provided in the end section on the first side cushion 21 side of the gas duct 23 (right end section in FIG. 2), the end section on the second side cushion 22 side of the gas duct 23 (left end section in FIG. 2), and the like.

Naturally, in the airbag device 10 in the fully expanded state, because the support members 6 that support the headrest 4 are inserted into the through-holes 24, the position of the gas duct 23 can be stabilized. Therefore, the number of tabs 16 used to attach the airbag 11 to the seat frame 1a can be reduced, allowing for use of just one tab 16 as in the present embodiment. Minimizing the number of the tabs 16 facilitates modification of the seat frame 1a to fit the airbag 11.

### [Shapes of the Through-Holes]

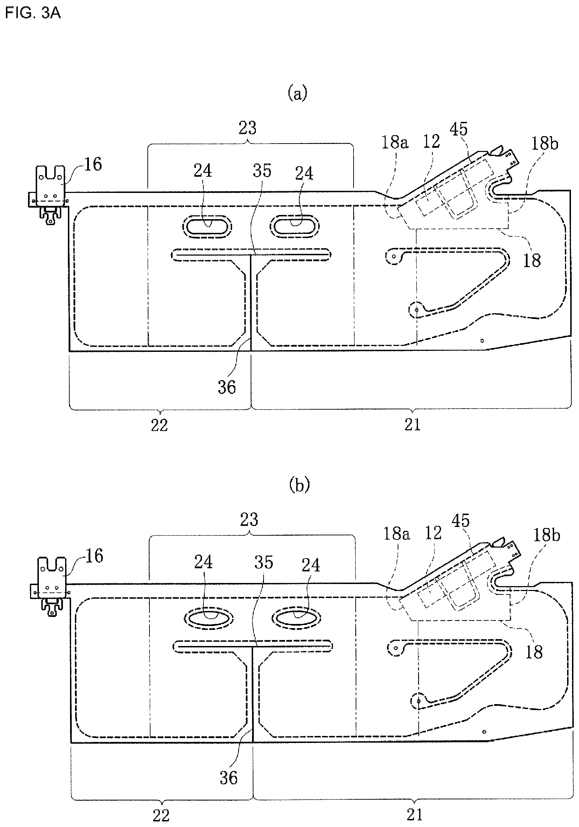

Next, the shapes of the through-holes 24 with which the gas duct 23 is provided will be described with reference to FIG. 3A to 3C using an example other than the circular shape given in the embodiment described above.

As illustrated in FIG. 3A(a), the through-holes 24 may have an oval shape whose major axis direction is the lengthwise direction of the gas duct 23 (left-right direction in FIG. 3A(a)). In addition, as illustrated in FIG. 3A(b), the through-holes may have an elliptic shape whose major axis direction is the lengthwise direction of the gas duct 23 (left-right direction in FIG. 3A(b)). **In** cases where the through-holes 24 are circular, if the size matches the outer diameter of the cylindrical support members 6, the distance between two support members 6 inserted into the through-holes 24 is fixed. In contrast, in cases where the through-holes 24 have an oval shape or an elliptic shape, and the through-holes 24 are installed with the major axis direction of the oval or ellipse facing the lengthwise direction of the gas duct 23, flexibility in the distance between the support members 6 can be increased. Therefore, the number of seat 1 products capable of corresponding to the airbag 11 can be increased.

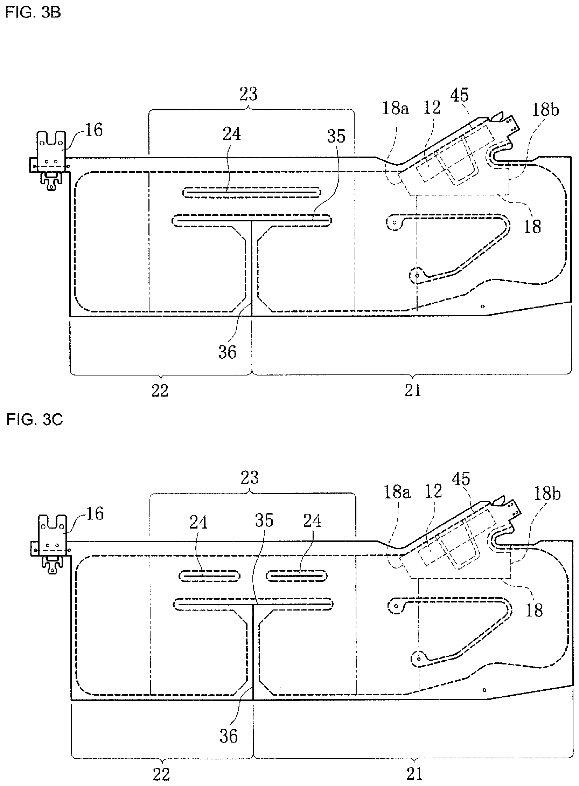

The through-holes 24 may be slits. In this case, as illustrated in FIG. 3B, there may be one continuous slit, and as illustrated in FIG. 3C, there may be two separate slits. Both slits are cut in the same direction as the lengthwise direction of the gas duct 23 (left-right direction in FIG. 3B and 3C). Slit-shaped through-holes 24 of this manner can also increase flexibility in the distance between the two support members 6, and can increase the number of products that correspond to the airbag 11. Note that in the present embodiment, the through-holes 24 slits have hardly any gap, however, the slits may have a gap to some extent.

Whether the through-holes 24 have an oval shape, an elliptic shape, or a slit shape, the periphery of the through-holes 24 is sewn as illustrated in FIG. 3A to 3C. The through-holes 24 are demarcated from the gas flow path in the gas duct 23 by the periphery thereof being sewn.

### [Airbag Stowage and Installation on the Seat]

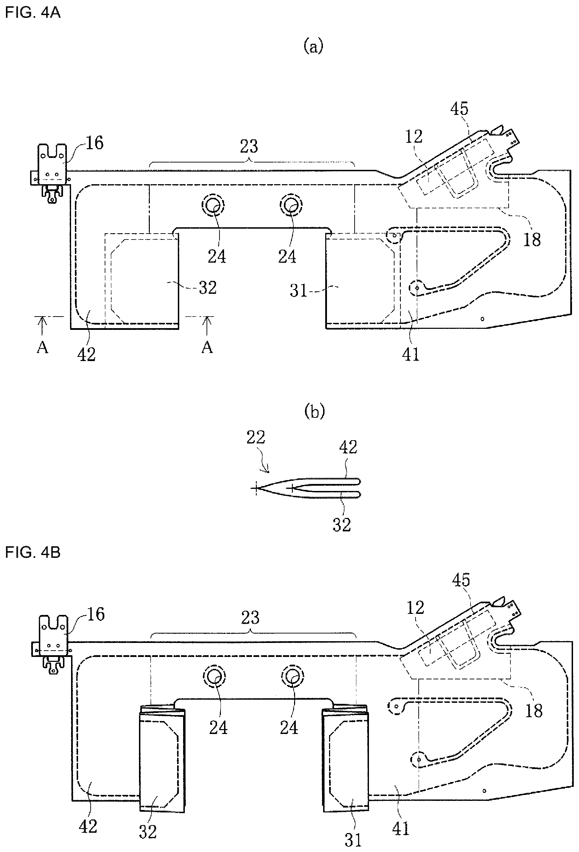

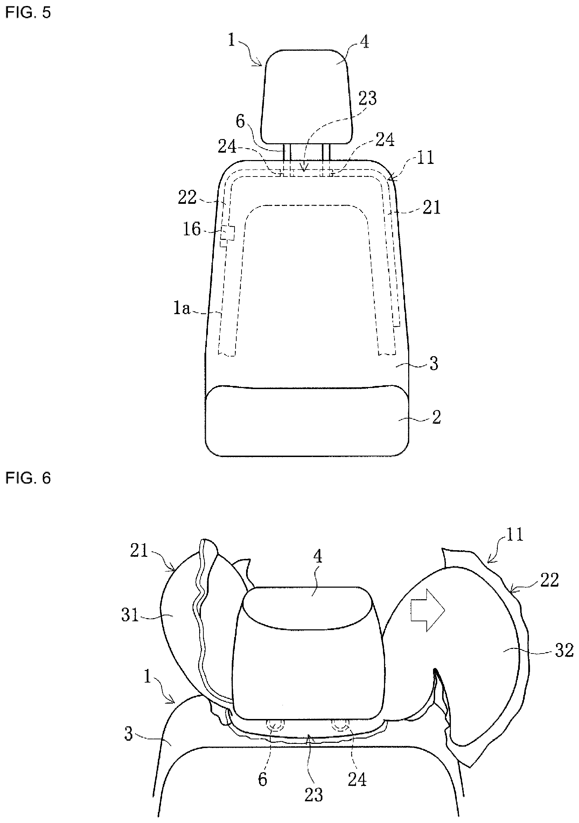

Folding methods for stowing the airbag 11 in the seat 1 will be described with reference to FIG. 4A and 4B, and descriptions of installed states of the airbag 11 on the seat 1 will be given with reference to FIG. 5.

In the flat condition illustrated in FIG. 2, the airbag 11 is rolled into a rolled form facing from the front side to the rear side, or by folding the airbag into a bellows shape facing from the front side to the rear side, the dimension in the front-to-back direction shortens, and the airbag takes on a stowed form as when stowed in the seat 1. As for the method for rolling the airbag into the rolled form, the airbag 11 may be rolled on the front side in FIG. 2 or the back side. In addition, substantially the entire airbag 11 may be rolled into the rolled form, or may be rolled into a form rolled midway in the front-to-back direction.

Furthermore, the airbag 11 may be rolled into a rolled form facing from the front side to the rear side, or, as illustrated inFIG. 4A , prior to folding into a bellows shape, each of the head cushion sections 31, 32 may be pushed inside each of the body cushion sections 41, 42. The airbag 11 may be rolled into the rolled form facing from the front side to the rear side, or, as illustrated in FIG. 4B, prior to folding into a bellows shape, each of the head cushion sections 31, 32 may be folded into a bellows shape overlaying the rear surface of each of the body cushion sections 41, 42.

When the folding method in FIG. 4A is used, in the stowed form of the airbag 11, each of the head cushion sections 31, 32 are pushed into each of the body cushion sections 41, 42. Additionally, when the folding method in FIG. 4B is used, in the stowed form of the airbag 1, the head cushion sections 31, 32 are folded so as to overlay the outer surfaces of the body cushion sections 41, 42. Regardless of the stowed form, the airbag 11 entirely or mostly moves the head cushion sections 31, 32 further toward the outer side than a root position of the head cushion sections 31, 32 in the flat condition, making the gas duct 23 portion more narrow than the other portions.

As illustrated in FIG. 5, the airbag 11 in the stowed form is stowed in the seat 1 in a folded state along the seat frame 1a. The airbag 11 has the gas duct 23 stowed on the upper end part of the backrest section 3, the first side cushion 21 stowed on the near side of the seat 1, and the second side cushion 22 stowed on the far side of the seat 1. The upper end part of the backrest section 3 is provided with the pair of support members 6 that support the headrest 4 against the seat frame 1a. When the gas duct 23 is stowed on the upper end part of the backrest section 3, the support members 6 are respectively inserted into each of the through-holes 24 of the gas duct 23.

Here, if a configuration in which the gas duct 23 is provided with the through-holes 24 is not adopted, differing from the present embodiment, the stowing part for the airbag 11 is secured to the upper end part of the backrest section 3 on the rear side or the front side between the pair of support members 6. However, when the stowing part for the airbag 11 is secured to the rear side or the front side between the pair of support members 6, a width where the stowing part for the airbag 11 can be secured is narrower. In the present embodiment, because the support members 6 are inserted into the through-holes 24 with which the gas duct 23 is provided, both the rear side and the front side thereof form the stowing part, interposing the pair of support members 6, which widens the stowing part for the airbag 11.

The airbag 11, in an installed state stowed in the seat 1, is secured to the seat frame 1a of the seat 1 at two locations: the tab 16, and the stowing part 45 for the inflator 12. In the stowing part 45 of the inflator 12, the inflator 12 is secured to the seat frame 1a by a stud bold (not illustrated). Secured as so, the stud bold passes through an insertion hole of the stowing part 45, whereby the stowing part 45 is secured to the seat frame 1a.

In addition, in the airbag 11 in the installed position, the support members 6, which are attached to and support the headrest 4 against the seat frame 1a, are inserted into the through-holes 24 of the gas duct 23. As such, in the present embodiment, when the gas injected from the inflator 12 flows, the gas duct 23 form stabilizes and the flow of gas in the gas duct 23 is smooth. Furthermore, in the present embodiment, because the support members 6 are inserted into the through-holes 24, and the position of the gas duct 23 is stabilized, when, for example, the second side cushion 22 first receives an initial collision load of the occupant 5, the amount of movement toward the outer side of the second side cushion 22 can be suppressed. In the present embodiment, from which these effects can be obtained, a tab for securing the inlet side and/or the outlet side of the gas duct 23 can be omitted. As illustrated in FIG. 5, the gas duct 23 is not provided with a tool for fixation (tab 16) to the seat frame 1a. This limits the number of tabs 16 to one, and facilitates modification of the seat frame 1a to fit the airbag 11.

In the airbag 11 in the installed state, the outer sides of the body cushion sections 41, 42 respectively form the lower sides in the left-right direction in the flat condition. The body cushion section 42 has the outer end part on the left in the flat condition secured to the seat frame 1a by the tab 16. In addition, in the airbag 11 in the flat condition, the vertical slit 36 is provided between the head cushion sections 31, 32. Therefore, when each of the body cushion sections 41, 42 expand and deploy forward, the head cushion sections 31, 32 rise up to the upper side.

### Effects of the Present Embodiment

In the airbag device 10 according to present invention, for example, when a side collision, rollover, or the like subjects the vehicle to an impact, the inflator 12 receives a signal from a sensor and injects gas into the first side cushion 21, and the first side cushion 21 expands and deploys. A portion of the gas injected into the first side cushion 21 from the inflator 12 is supplied to the second side cushion 22 through the gas duct 23. This expands and deploys the second side cushion 22. In the fully expanded state, the gas duct 23, which connects the first side cushion 21 and the second side cushion 22, is positioned between the upper portion of the backrest section 3 of the seat 1 and the lower portion of the headrest 4. The first side cushion 21 and the second side cushion 22 interpose the occupant 5, facing each other.

Here, directly following a side collision from the far side, the occupant 5 seated in the seat 1 experiences significant movement of the body in the lateral direction from the shoulders upward and collides with the second side cushion 22. At this time, the second side cushion 22 receives a collision load of the occupant 5 and moves outward within the height range of the upper portion of the seat 1 corresponding to a range of the occupant 5 from the shoulders upward. Along with this movement, the first side cushion 21 is pulled in the lateral direction via the gas duct 23 and moves to the side of the occupant 5. If the occupant 5 moves toward the side opposite the initial collision, the occupant 5 collides with the first side cushion 21. On the other hand, directly following a side collision from the near side, the first side cushion 21 receives a collision load of the occupant 5 and moves outward, the movement of which is accompanied by the second cushion 22 being pulled in the lateral direction via the gas duct 23 and moving to the side of the occupant 5.

In the present embodiment, the gas duct 23 is positioned within a height range of the occupant 5 at first collision. Therefore, the load in the lateral direction acts directly on the gas duct 23. Thus, in contrast to, for example, an airbag having both side cushions joined above the head of the occupant, both of the side cushions 21, 22 move integrally in the lateral direction. This shortens the distance that the occupant 5 moves before colliding with the side cushions 21, 22, allowing the occupant 5 moving to the side opposite the initial collision to be restrained early on. In addition, in the present embodiment, because the attachment members are inserted into the through-holes 24 of the gas duct 23, even in the mid-stages of expansion and deployment, flapping of the first side cushion 21 and the second side cushion 22 can be prevented. Furthermore, in the present embodiment, because the support members 6 are inserted into the through-holes 24 of the gas duct 23 during expansion and deployment, an occupant 1 stops the side cushions 21, 22 that has received the collision load of the first collision, allowing the amount of outward movement of the side cushion to be suppressed. When the shape and size of the through-holes 24 and the shape and size of the support members 6 match, this amount of movement can be further reduced. In the present embodiment, in the fully expanded state, because the support members 6 are inserted into the through-holes 24 of the gas duct 23, the duct form can be stabilized. According to the present embodiment, the side cushions 21, 22 on both sides of the seat 1 behave integrally during a side collision, and the position and form of the gas duct 23 can be stabilized during expansion and deployment, allowing the occupant 1 to be restrained early on.

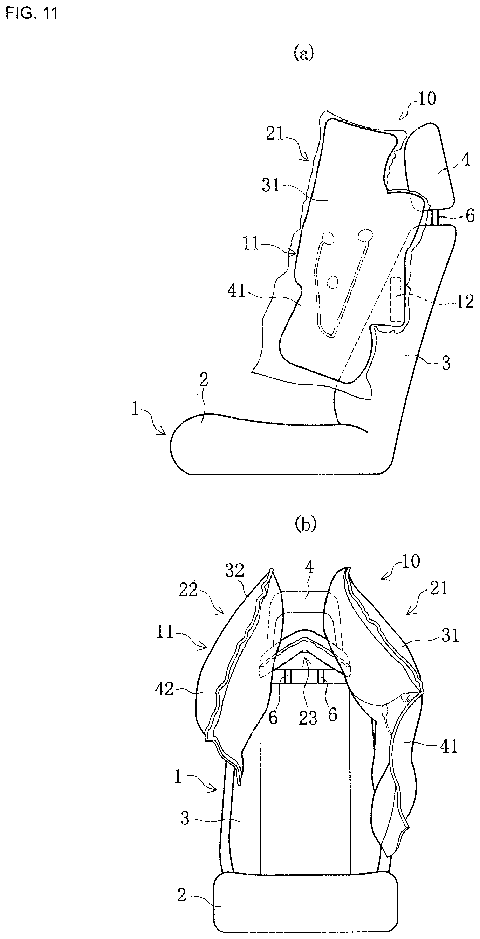

Here, a visual description will be added on the effects of stabilizing the gas duct 23 form obtained by the present embodiment. If a configuration in which the through-holes 24 of the gas duct 23 have the support members 6 inserted, as in the present embodiment, is not adopted, when the gas duct 23 is stowed on the front side between the pair of support members 6 as illustrated in FIG. 11(a), there is risk of the gas duct 23 being bent in the middle in the lengthwise direction thereof during expansion and deployment as illustrated in FIG. 11(b). In the present embodiment, the gas duct 23 has the support members 6 inserted into the through-holes 24, and when fully expanded, is interposed between the upper end part of the backrest section 3 and the lower end part of the headrest 4, taking on a straight, extended state in the width direction of the seat 1. In the present embodiment, the gas duct 23 form is stabilized and does not obstruct the flow of gas.

Note that in cases where the vehicle rolls over, the occupant 5 moves left and right according to the rotation of the vehicle. Likewise in these cases, because the side cushions 21, 22 on both sides behave integrally, the airbag device 10 according to the present embodiment is capable of restraining the occupant 5 early on.

In order to protect an occupant against side collisions, in conventional cases, each of the following are provided: a curtain airbag for protecting the head of an occupant during a near side collision, a near side airbag for protecting the occupant in a range from the shoulders to the waist during a near side collision, and a far side airbag for protecting the head during a far side collision. Meanwhile, in the future, airbag devices will be required to be compatible with automated driving. With automated driving, it is assumed that occupants will tilt the backrest of the seat backward to assume a comfortable position, or that occupants will switch the seat orientation between the front and the rear of the vehicle. However, in order to make the conventional airbag configuration described above compatible with automated driving, the protective range of each airbag must be extended, which poses challenges in terms of cost and design.

In contrast, in the present embodiment, because the occupant 5 can be restrained early on, enlargement of the size of each of the side cushions 21, 22 can be restricted, the side cushions 21, 22 can each be made a moderate size, which allows for favorable configurations of the airbag 11 in terms of design. In addition, because the head cushions 31, 32 are respectively tilted slightly toward the sides of the head, the head restraining positions are closer to the occupant 5, enabling improved restraining performance. Further, the curtain airbag can be omitted because the first side cushion 21 provides a protective range from the head to the abdomen of the occupant 5. This eliminates the need to mount airbags to the roof of the vehicle and increases flexibility in the vehicle layout. In addition, cost and weight can be reduced according to the present embodiment compared to cases in which separate side airbags are provided on both sides of the seat 1.

Note that the airbag device 10 can be installed in any of the front and rear seats of a vehicle, as well as in a single-seat vehicle. Since the airbag device 10 is not dependent on vehicle layout, a portion or all of the airbag device 10 can be modularized for application in a plurality of vehicle models.

In the present embodiment, the inflator 12 is capable of expanding the entire airbag 11 alone, which can restrict increases in the number of parts for the airbag device 10.

In the present embodiment, the rear portion of first head cushion section 31 and the rear portion of the second head cushion section 32 of the airbag 11 interpose the headrest 4 of the seat 1 in the fully expanded state, facing (see FIG. 1C, 1D). During a side collision, when the occupant 5 collides with the second side cushion 22, the second side cushion 22 moves toward the outer side of the seat 1, rotating around an axis thereof in the up-down direction at the rear end part. Therefore, as illustrated in FIG. 6, the first head cushion section 31 of the first side cushion 21 is pulled by the second side cushion 22 via the gas duct 23 and collides with the side surface of the headrest 4. Due to this collision, the airbag 11 receives a reaction force from the headrest 4, which can suppress shaking of the airbag 11, and improves restraining performance of the airbag 11 on the occupant 5.

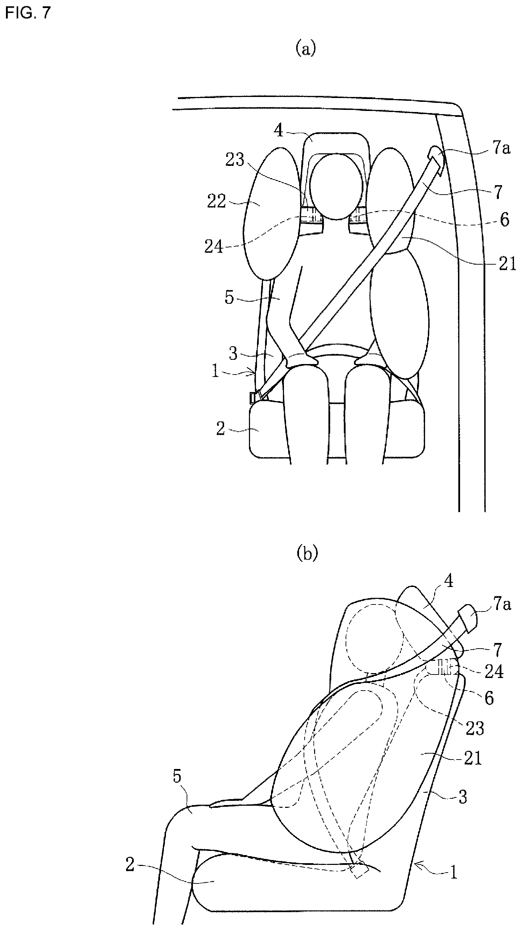

In addition, in the present embodiment, when a seatbelt 7 is stretched downward at an angle from the first side cushion 21 side to the second side cushion 22 side over the body of the occupant 5 seated in the seat 1, the first side cushion 21 lies between the seatbelt 7 and the occupant 5 in the fully expanded state as illustrated in FIG. 7. The front part of the first side cushion 21 is caught by the seatbelt 7. Therefore, the reaction force from the first side cushion 21 on the occupant 5 acts early on, allowing for restraint of the occupant 5 from the side and the front to be carried out early on. Note that this effect is obtained independently of the installation position (B-pillar, seat, or the like) of an upper side anchor 7a of the seatbelt 7.

In addition, in the present embodiment, the near side of the seat 1 is provided with the first side cushion 21, to which the inflator 12 is attached. Furthermore, on the near side, the two outlets 18a, 18b of the gas guide 18 open into the upper side cushion section 41a and the lower side cushion section 41b. Therefore, during a near side collision, the first body cushion section 41, which has a short window of time to protect the occupant 5 from the collision, can be expanded and deployed ahead of the other cushion sections.

### [Configurations Included in the Present Embodiment]

As understood from the above description, the airbag device 10 also includes the following configurations.

In the airbag device 10, the first side cushion 21 has the first head cushion section 31 that expands and deploys so as to cover one side of the head of the occupant 5, and a first body cushion section 41 that expands and deploys so as to cover one side of the body of the occupant 5, and may have the second side cushion section 22 that expands and deploys so as to cover the other side of the head.

In the airbag device 10, the first side cushion 21 and the second side cushion 22 may, in the flat condition, respectively have the outer side cushion section positioned on the outer side of the gas duct 23 in the left-right direction of the airbag 11, extending further toward the front side than the front end of the gas duct 23, and the inner side cushion section extending to the inner side from the portion within this outer side cushion section that extends to the front side.

In the airbag device 10, in the fully expanded state, when the occupant 5 seated in the seat 1 collides with either the first side cushion 21 or the second side cushion 22, the other side cushion is pulled by one of the side cushions via the gas duct 23, and may be made to collide with the side surface of the headrest 4 of the seat 1.

In the airbag device 10, when a seatbelt is stretched downward at an angle from the first side cushion 21 side to the second side cushion 22 side over the body of the occupant seated in the seat 1, the first side cushion 21 may lie between the seatbelt and the occupant 5 in the fully expanded state.

### First Variation of the Embodiment

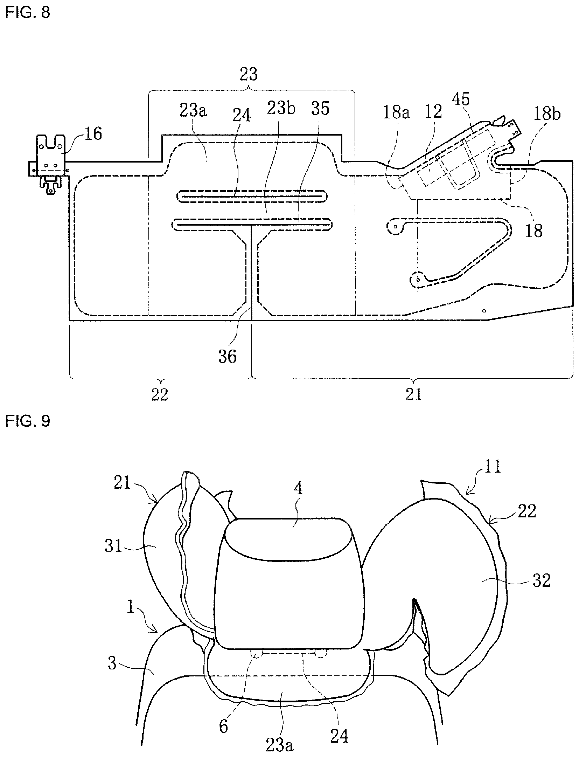

As illustrated in FIG. 8, the present embodiment may, with the airbag 11 in the flat condition, have widening portions (23a, 23b) whose width enlarges in the direction intersecting the direction in which the gas duct 23 extends (up-down direction in FIG. 8). In the fully expanded state, the widening portions (23a, 23b) include the portion 23a that expands toward the rear of the seat.

In the present Modified Example, the widening portions consist of the rear chamber 23a positioned on the rear side of the through-holes 24 (upper side in FIG. 8) and the front chamber 23b positioned on the front side of the through-holes 24 (lower side in FIG. 8). The width of the rear chamber 23a in the front-to-back direction is greater than the width of the front chamber 23b in the front-to-back direction.

According to the present Modified Example, providing the widening portions (23a, 23b) increases the diameter of the gas duct 23, which increases the amount of gas flowing from the first side cushion 21 to the second side cushion 22, and allows the second side cushion to be expanded and deployed early on.

In addition, in the present Modified Example, by making the width of the rear chamber 23a greater than the width of the front chamber 23b, as illustrated in FIG. 9, the size of the rear chamber 23a in the fully expanded state positioned to the rear of the support members 6 of the headrest 4 can be increased. In the present Modified Example, in the fully expanded state, a cushion function for protecting the head of an occupant in the back seat can be imparted to the rear chamber 23a positioned to the rear of the support members 6.

### Second Variation of the Embodiment

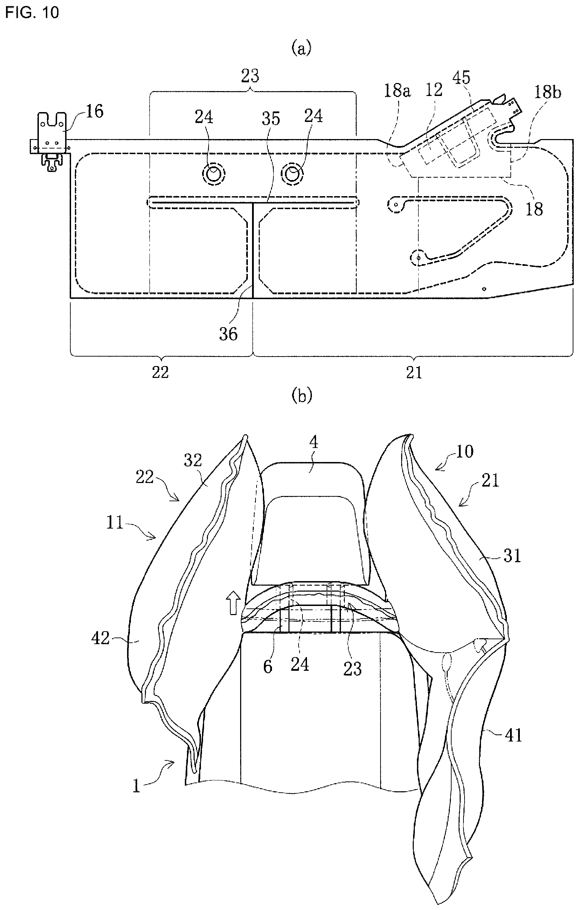

In the present Modified Example, with the airbag 11 in the flat condition, as illustrated in FIG. 10(a), the length of the cut for the horizontal slit 35 is longer in the left-right direction than in the embodiment described above.

According to the present Modified Example, the length of the gas duct 23 is longer in the fully expanded state by the slight amount that the horizontal slit 35 is longer. This allows the range of motion of the gas duct 23 positioned between the upper end surface of the backrest section 3 and the lower end surface of the headrest 4 to be increased, and facilitates application of the airbag 11 in vehicles in which the headrest 4 can be moved vertically. For example, as illustrated in FIG. 10(b), even in the case that a side collision is experienced at the highest point, because the range of motion of the gas duct 23 is increased due to the headrest 4 being a vertically moveable type, the gas duct 23 can easily accompany the headrest 4.

### Other Variations

In the embodiment described above, the support members 6 may be integrated with the backrest section 3, and may be integrated with the headrest 4. Furthermore, the shape of the support member 6 may be that of a rectangular column, and there may be one or there may be three or more of the support members 6. In this case, the shape and number of the through-holes 24 may also be changed as appropriate according to the shape and number of the support members 6. In addition, in the embodiment described above, the attachment members 6 may be members other than members that support the headrest 4.

In the embodiment described above, the length of the horizontal slit 35 can be adjusted to match the width of the upper end part of the seat frame 1a. Alternatively, in cases where the headrest 4 is of a vertically moveable type, if the range of motion of the gas duct 23 needs to be increased, the length of the horizontal slit 35 may be freely adjusted. Furthermore, in the present embodiment, each of the slits 35, 36 have hardly any gap; however, the slit may have a gap to some extent.

In the embodiment described above, the airbag 11 may be configured such that the protective range of the first side cushion 21 extends from the head to the waist of the occupant 5.

In the embodiment described above, the airbag 11 may be configured such that the protective range of the second side cushion 22 covers only the head, and the airbag 11 may be configured such that the protective range extends to the abdomen or the waist. The head cushion sections 31, 32 may be provided on just the first side cushion 21 or the second side cushion 22. In cases where the vehicle has a large center console, the space in which the second side cushion 22 is able to expand and deploy is narrowed, in which case the second cushion 22 may be made to expand and deploy along the top surface of the center console.

### INDUSTRIAL APPLICABILITY

The present invention is applicable to vehicle seats comprising airbag devices and the like that protect the sides of an occupant.

### EXPLANATION OF CODES

1. Seat
3. Backrest section
4. Headrest
5. Occupant
6 Support members (attachment members)
10. Airbag device
11. Airbag
12. Inflator
16. Tab (securing part)
21. First side cushion
22. Second side cushion
23. Gas duct (connecting member)
23a. Rear chamber (widening section)
23b. Front chamber (widening section)
24. Through-holes
31. First head cushion section (inner side cushion section)
32. Second head cushion section (inner side cushion section)
41. First body cushion section (outer side cushion section)
42. Second body cushion section (outer side cushion section)

## Claims

1. A vehicle seat (1) comprising an airbag device (10), comprising:
an airbag (11) having:
a first side cushion (21) that expands and deploys so as to cover one side of an occupant (5) seated in the vehicle seat (1),
a second side cushion (22) that expands and deploys so as to cover another side of the occupant (5), and
a connecting member that has through-holes (24) into which attachment members for attaching a headrest (4) to a backrest section (3) of the seat (1) can be inserted, and that connects the first side cushion (21) and the second side cushion (22); and
an inflator (12) for injecting gas that inflates the airbag (11), wherein the attachment members are inserted into the through-holes (24) of the connecting member when the airbag (11) expands and deploys, **characterized in that** the connecting member is a duct (23) through which the gas can flow, and a periphery of the through-holes (24) is demarcated by a gas flow path in the duct (23).

2. The vehicle seat (1) of claim 1, wherein the attachment members are support members (6) that support the headrest (4).

3. The vehicle seat (1) of claim 1 or 2 , wherein the inflator (12) is attached to the first side cushion (21), and a portion of the gas injected into the first side cushion (21) from the inflator (12) is supplied to the second side cushion (22) through the duct (23).

4. The vehicle seat (1) of any one of claims 1 to 3, wherein a shape and size of the through-holes (24) matches a shape and size of the attachment members.

5. The vehicle seat (1) of any one of claims 1 to 3, wherein the through-holes (24) have an oval shape or an elliptic shape, and are oriented such that the major axis direction of the oval or ellipse faces the longitudinal direction of the connecting member.

6. The vehicle seat (1) of any one of claims 1 to 3, wherein the through-holes (24) are slits (35,36).

7. The vehicle seat (1) of any one of claims 1 to 6, wherein the through-holes (24) are provided in the center section of the connecting member in the width direction.

8. The vehicle seat (1) of any one of claims 1 to 7, wherein, with the airbag (11) spread out while uninflated and laid in a flat condition on a flat surface, the duct (23) has a widening portion whose width expands in the direction orthogonal to the direction in which the duct (23) extends, and the widening portion has a portion that expands toward the rear of the seat in (1) the fully expanded state.

9. The vehicle seat (1) of claim 8, wherein, in the flat condition, the widening portion is composed of a rear chamber (23a) positioned behind the through-holes (24) and a front chamber (23b) positioned in front of the through-holes (24), and the attachment members are the support members (6) that support the headrest (4), wherein in the fully expanded state, the rear chamber (23a) is positioned to the rear of the support members (6) and forms a cushion for protecting the head of an occupant in the back seat.

10. The vehicle seat (1) of claim 9, wherein a width of the rear chamber (23a) in the front-to-back direction is greater than the width of the front chamber (23b) in the front-to-back direction.

11. The vehicle seat (1) of any one of claims 1 to 10, wherein the airbag (11) is provided with a securing part on either the first side cushion (21) or the second side cushion (22) for securing the airbag (11) to the seat, and a stowing part (45) for the inflator (12) may be provided on the other, wherein the airbag (11) is secured to the seat (1) by the securing part and the stowing part (45) for the inflator (12).

12. The vehicle seat (1) of claim 11, wherein the connecting member is not provided with a securing part for securing the connecting member to the seat (1).

## Patentansprüche

1. Fahrzeugsitz (1), umfassend eine Airbagvorrichtung (10), umfassend:
einen Airbag (11) der aufweist:
ein erstes Seitenpolster (21), das sich ausdehnt und entfaltet, um eine Seite eines auf dem Fahrzeugsitz (1) sitzenden Insassen (5) abzudecken,
ein zweites Seitenpolster (22), das sich ausdehnt und entfaltet, um eine andere Seite des Insassen (5) abzudecken, und
ein Verbindungselement, das Durchgangslöcher (24) aufweist, in die Befestigungselemente zum Befestigen einer Kopfstütze (4) an einem Rückenlehnenabschnitt (3) des Sitzes (1) eingeführt werden können, und das das erste Seitenpolster (21) und das zweite Seitenpolster (22) verbindet; und
einen Gasgenerator (12) zum Einblasen von Gas, das den Airbag (11) aufbläst, wobei die Befestigungselemente in die Durchgangslöcher (24) des Verbindungselements eingeführt werden, wenn sich der Airbag (11) ausdehnt und entfaltet, **dadurch gekennzeichnet, dass** das Verbindungselement ein Kanal (23) ist, durch den das Gas strömen kann, und ein Umfang der Durchgangslöcher (24) durch einen Gasströmungsweg in dem Kanal (23) abgegrenzt ist.

2. Fahrzeugsitz (1) nach Anspruch 1, wobei die Befestigungselemente Stützelemente (6) sind, die die Kopfstütze (4) stützen.

3. Fahrzeugsitz (1) nach Anspruch 1 oder 2, wobei der Gasgenerator (12) an dem ersten Seitenpolster (21) befestigt ist und ein Teil des von dem Gasgenerator (12) in das erste Seitenpolster (21) eingeblasenen Gases durch den Kanal (23) dem zweiten Seitenpolster (22) zugeführt wird.

4. Fahrzeugsitz (1) nach einem der Ansprüche 1 bis 3, wobei eine Form und eine Größe der Durchgangslöcher (24) mit einer Form und einer Größe der Befestigungselemente übereinstimmen.

5. Fahrzeugsitz (1) nach einem der Ansprüche 1 bis 3, wobei die Durchgangslöcher (24) eine ovale Form oder eine elliptische Form aufweisen und derart ausgerichtet sind, dass die Hauptachsenrichtung des Ovals oder der Ellipse in die Längsrichtung des Verbindungselements weist.

6. Fahrzeugsitz (1) nach einem der Ansprüche 1 bis 3, wobei die Durchgangslöcher (24) Schlitze (35, 36) sind.

7. Fahrzeugsitz (1) nach einem der Ansprüche 1 bis 6, wobei die Durchgangslöcher (24) in dem Mittelabschnitt des Verbindungselements in der Breitenrichtung bereitgestellt sind.

8. Fahrzeugsitz (1) nach einem der Ansprüche 1 bis 7, wobei, wenn der Airbag (11) ausgebreitet ist während er nicht aufgeblasen ist und in einem flachen Zustand auf einer flachen Oberfläche liegt, der Kanal (23) einen sich erweiternden Teil aufweist, dessen Breite sich in der Richtung orthogonal zu der Richtung ausdehnt, in der sich der Kanal (23) erstreckt, und wobei der sich erweiternde Teil einen Teil aufweist, der sich in (1) dem vollständig ausgedehnten Zustand zu der Rückseite des Sitzes hin ausdehnt.

9. Fahrzeugsitz (1) nach Anspruch 8, wobei in dem flachen Zustand, der sich erweiternde Teil aus einer hinter den Durchgangslöchern (24) angeordneten hinteren Kammer (23a) und einer vor den Durchgangslöchern (24) angeordneten vorderen Kammer (23b) besteht und die Befestigungselemente die Stützelemente (6) sind, die die Kopfstütze (4) stützen, wobei in dem vollständig ausgedehnten Zustand die hintere Kammer (23a) hinter den Stützelementen (6) angeordnet ist und ein Polster zum Schützen des Kopfes eines Insassen auf dem Rücksitz bildet.

10. Fahrzeugsitz (1) nach Anspruch 9, wobei eine Breite der hinteren Kammer (23a) in der Vorwärts-Rückwärts-Richtung größer ist als die Breite der vorderen Kammer (23b) in der Vorwärts-Rückwärts-Richtung.

11. Fahrzeugsitz (1) nach einem der Ansprüche 1 bis 10, wobei der Airbag (11) entweder an dem ersten Seitenpolster (21) oder an dem zweiten Seitenpolster (22) mit einem Anbringungsbauteil zum Anbringen des Airbags (11) an dem Sitz versehen ist und an dem anderen ein Verstaubauteil (45) für den Gasgenerator (12) vorgesehen sein kann, wobei der Airbag (11) durch das Anbringungsbauteil und das Verstaubauteil (45) für den Gasgenerator (12) an dem Sitz (1) angebracht ist.

12. Fahrzeugsitz (1) nach Anspruch 11, wobei das Verbindungselement nicht mit einem Anbringungsbauteil zum Anbringen des Verbindungselements an dem Sitz (1) versehen ist.

## Revendications

1. Siège de véhicule (1) comprenant un dispositif de coussin de sécurité gonflable (10), comprenant :
un coussin de sécurité gonflable (11) ayant :
un premier coussinet latéral (21) qui s'expanse et se déploie de façon à couvrir un côté d'un occupant (5) assis dans le siège (1) de véhicule,
un second coussinet latéral (22) qui s'expanse et se déploie de façon à couvrir un autre côté de l'occupant (5), et
un élément de liaison qui a des trous traversants (24) dans lesquels des éléments d'attachement permettant d'attacher un appuie-tête (4) à une section de dossier (3) du siège (1) peuvent être insérés, et qui relie le premier coussinet latéral (21) et le second coussinet latéral (22) ; et
un gonfleur (12) permettant d'injecter du gaz qui gonfle le coussin de sécurité gonflable (11), dans lequel les éléments d'attachement sont insérés dans les trous traversants (24) de l'élément de liaison lorsque le coussin de sécurité gonflable (11) s'expanse et se déploie, **caractérisé en ce que** l'élément de liaison est un conduit (23) à travers lequel le gaz peut s'écouler, et une périphérie des trous traversants (24) est délimitée par un trajet d'écoulement de gaz dans le conduit (23).

2. Siège de véhicule (1) selon la revendication 1, dans lequel les éléments d'attachement sont des éléments de support (6) qui supportent l'appuie-tête (4).

3. Siège de véhicule (1) selon la revendication 1 ou 2, dans lequel le gonfleur (12) est attaché au premier coussinet latéral (21), et une portion du gaz injecté dans le premier coussinet latéral (21) à partir du gonfleur (12) est fournie au second coussinet latéral (22) à travers le conduit (23).

4. Siège de véhicule (1) selon l'une quelconque des revendications 1 à 3, dans lequel une forme et une taille des trous traversants (24) concordent avec une forme et une taille des éléments d'attachement.

5. Siège de véhicule (1) selon l'une quelconque des revendications 1 à 3, dans lequel les trous traversants (24) ont une forme ovale ou une forme elliptique, et sont orientés de telle sorte que la direction de grand axe de l'ovale ou de l'ellipse fait face vers la direction longitudinale de l'élément de liaison.

6. Siège de véhicule (1) selon l'une quelconque des revendications 1 à 3, dans lequel les trous traversants (24) sont des fentes (35, 36).

7. Siège de véhicule (1) selon l'une quelconque des revendications 1 à 6, dans lequel les trous traversants (24) sont fournis dans la section centrale de l'élément de liaison dans la direction en largeur.

8. Siège de véhicule (1) selon l'une quelconque des revendications 1 à 7, dans lequel, avec le coussin de sécurité gonflable (11) étalé dans l'état dégonflé et posé dans une condition plate sur une surface plane, le conduit (23) a une portion qui s'élargit dont la largeur s'expanse dans la direction orthogonale à la direction dans laquelle le conduit (23) s'étend, et la portion qui s'élargit a une portion qui s'expanse en direction de l'arrière du siège dans (1) l'état complètement déployé.

9. Siège de véhicule (1) selon la revendication 8, dans lequel, dans la condition plate, la portion qui s'élargit est composée d'une chambre arrière (23a) positionnée derrière les trous traversants (24) et d'une chambre avant (23b) positionnée devant les trous traversants (24), et les éléments d'attachement sont les éléments de support (6) qui supportent l'appuie-tête (4), dans lequel dans l'état complètement expansé, la chambre arrière (23a) est positionnée vers l'arrière des éléments de support (6) et forme un coussinet permettant de protéger la tête d'un occupant dans le siège arrière.

10. Siège de véhicule (1) selon la revendication 9, dans lequel une largeur de la chambre arrière (23a) dans la direction d'avant en arrière est supérieure à la largeur de la chambre avant (23b) dans la direction d'avant en arrière.

11. Siège de véhicule (1) selon l'une quelconque des revendications 1 à 10, dans lequel le coussin de sécurité gonflable (11) est pourvu d'une partie de fixation soit sur le premier coussinet latéral (21) soit sur le second coussinet latéral (22) permettant de fixer le coussin de sécurité gonflable (11) au siège, et une partie de rangement (45) pour le gonfleur (12) peut être fournie sur l'autre, dans lequel le coussin de sécurité gonflable (11) est fixé au siège (1) par la partie de fixation et la partie de rangement (45) pour le gonfleur (12).

12. Siège de véhicule (1) selon la revendication 11, dans lequel l'élément de liaison n'est pas pourvu d'une partie de fixation permettant de fixer l'élément de liaison au siège (1).
